# EUROPÄISCHE PATENTANMELDUNG

(11) **EP 1 164 732 A2**
(43) Veröffentlichungstag der Anmeldung: **19.12.2001**
(21) Anmeldenummer: 01109599.9
(22) Anmeldetag: 18.04.2001
(51) Int. Cl.: H04J 3/16, H04L 25/02, H04J 3/22

(54) **Verfahren und Anordnung zur Übertragung von mindestens einem Clientsignal innerhalb eines Serversignales**

(30) Priorität: 13.06.2000 DE 10029063
(71) Anmelder: SIEMENS AKTIENGESELLSCHAFT, 80333 München (DE)
(72) Erfinder: Heiles, Jürgen, 81371 München (DE)

(57) **Zusammenfassung**

Innerhalb eines eine vorgegebene Übertragungsbitrate (F) aufweisenden Serversignales (ss) wird zumindest ein Clientsignal (cds) übertragen, wobei die Übertragungsbitrate (f) des Clientsignals (cds) und die Übertragungsbitrate (F) des Serversignals (ss) unterschiedlich sind. Hierzu wird sendeseitig zumindest eine die Übertragungsbitratenverhältnisse anzeigende Kennzahl (KZ) für zumindest ein Clientsignal (cds) ermittelt und die Daten des mindestens einen Clientsignales (cds) werden durch eine Sigma-Delta-Modulation (SDM) mit der ermittelten Kennzahl (KZ) gleichmäßig in das Serversignal (ss) eingefügt. Das Serversignal (ss) wird mit der ermittelten Kennzahl (KZ) übertragen und empfangsseitig werden durch eine Sigma-Delta-Modulation (SDM) mit der übertragenen Kennzahl (KZ) die Daten des mindestens einen Clientsignales (cds) ermittelt.

## Beschreibung

Die Erfindung betrifft ein Verfahren und eine Anordnung zur Übertragung von mindestens einem Clientsignal innerhalb eines eine vorgegebene Übertragungsbitrate aufweisenden Serversignales, wobei die Übertragungsbitrate des Clientsignals und die Übertragungsbitrate des Serversignals unterschiedlich sind.

Derzeitige digitale, in beispielsweise synchroner digitaler Hierarchie (SDH) oder plesynchroner digitaler Hierarchie (PDH) realisierte Übertragungssysteme unterstützen zwar unterschiedliche Clientssignale bezüglich der jeweiligen Übertragungsrate und des jeweiligen Übertragungsprotokolls, jedoch sind für die Übertragung der jeweiligen Clientsignale festgelegte Übertragungsraten- und Übertragungsprotokollspezifische Bearbeitungsschritte erforderlich. Hierzu sind Änderungen bzw. Umbauten an den Übertragungseinheiten des digitalen Übertragungssystems für die Übertragung von unterschiedliche Übertragungsraten aufweisenden Clientsignalen vorzusehen.

In bislang realisierten digitalen Übertragungssystemen werden digitale Serversignale mit einer variablen Bitrate vorgesehen, die an die Bitrate des zu übertragenden Clientsignals - Übertragungssignal eines Kunden des Übertragungssystems - gekoppelt sind. Des Weiteren weisen digitale Übertragungssignale einer konstanten Bitrate, insbesondere das digitale Serversignal, eine aus einem Overheadbereich und aus einem Payloadbereich bestehende Rahmenstruktur auf. Der Payloadbereich ist für die Übertragung von Clientsignalen vorgesehen und der Overheadbereich beinhaltet Steuerungs- und Überwachungsinformationen. Das Clientsignal belegt somit den gesamten Signalbereich ("Payloadarea" bzw. Payloadbereich) des Serversignals. Bei einer Änderung der Bitrate des Clientsignals wird die Bitrate des Serversignals entsprechend geändert bzw. angepaßt. Hierfür ist, soweit das Serversignal nicht die geforderten Übertragungsrate des zu übertragenen Clientsignals aufweist, üblicherweise eine Änderung bzw. Umkonfiguration einzelner Übertragungseinheiten des digitalen Übertragungssystems erforderlich. Derartige Verfahren bzw. Anordnungen sind in Fachkreisen unter dem Begriff "Digital Rapper" bekannt.

Bei hohen Übertragungsraten, beispielsweise in optischen Übertragungssystemen, wird aufgrund von technischen Realisierungsproblemen und aus Kostengründen der zur Übertragung mögliche Bitratenbereich des Serversignals sehr eingeschränkt. Variiert die Bitrate der Clientsignale, so wird die Bitrate bzw. Übertragungsrate des Serversignals daran angepaßt, welches einen Austausch bzw. eine Anpassung aller bitratensensitiven Komponenten innerhalb des optischen Übertragungssystems, beispielsweise von 3-R Regeneratoren und Taktrückgewinnungseinrichtungen, erfordert.

Desweiteren ist ein Mappingschema aus der ITU-T Recommandation G.707 bekannt, welches das Mapping von 34 Mbit/s und 45 Mbit/s PPH Signalen in ein SDH-VC-3-Signal definiert. Hierzu ist ein eine konstante Bitrate aufweisendes, digitales Serversignal vorgesehen, in dessen Payloadbereich das Clientsignal "gemapped" wird. Je nach Bitrate des Clientsignals wird der Payloadbereich des Serversignals mehr oder weniger effektiv aufgefüllt. Für das Mappingschema der ITU-T Recommandation G.707 werden feste Stopfpositionen und flexible Stopfpositionen sowie feste Clientdatenpositionen definiert, woraus sich für jedes eine unterschiedliche Bitrate aufweisende Clientsignal ein spezifisches Mappingschema ergibt. Das beschriebene Verfahren sieht zwar eine konstante Bitrate für das Serversignal vor, benötigt jedoch für jedes Clientsignal ein durch einen ITU-T-Standard definiertes Mappingschema, um Interworking zwischen den Kommunikationseinheiten bzw. Übertragungseinheiten verschiedener Hersteller zu gewährleisten. Die Schnittstellen zwischen dem eine variable Bitrate aufweisenden Clientsignal und dem eine feste Bitrate aufweisenden Serversignal müssen hierzu an ein Mappingschema angepaßt werden.

Die der Erfindung zugrundeliegende Aufgabe besteht darin, die Übertragung von eine variable Übertragungsrate aufweisenden Clientsignalen innerhalb eines eine konstante Übertragungsrate aufweisenden Serversignales zu verbessern. Die Aufgabe wird ausgehend von einem Verfahren gemäß den Merkmalen des Oberbegriffs des Patentanspruches 1 durch das Merkmal des kennzeichnenden Teils gelöst.

Der wesentliche Aspekt des erfindungsgemäßen Verfahrens ist darin zu sehen, daß sendeseitig zumindest eine die Übertragungsbitratenverhältnisse anzeigende Kennzahl für zumindest ein Clientsignal ermittelt wird und die Daten des mindestens einen Clientsignales durch eine Sigma-Delta-Modulation mit der ermittelten Kennzahl gleichmässig in das Serversignal eingefügt werden. Darüber hinaus wird das Serversignal mit der ermittelten Kennzahl übertragen und empfangsseitig werden durch eine Sigma-Delta-Modulation mit der übertragenen Kennzahl aus dem übertragenen Serversignal die Daten des mindestens einen Clientsignales ermittelt. Die Erfindung beschreibt ein Verfahren, daß ein eine konstante vorgegebene Übertragungsbitrate aufweisendes Serversignal zur Übertragung von unterschiedliche Übertragungsbitraten aufweisenden Clientsignalen unterstützt, d.h. erfindungsgemäß wird anhand der Übertragungsbitraten des Clientsignals und des Serversignals die Anzahl der pro Serverrahmen innerhalb des Payloadbereiches des Serversignales übermittelbaren Daten des Clientsignals ermittelt. Die ermittelte Anzahl der Daten wird als Kennzahl einem Sigma-Delta-Modulator zugeführt, der ein Clientbitsteuersignal zur nahezu gleichmässigen Verteilung der Clientdaten über beispielsweise den gesamten Payloadbereich des Serversignals erzeugt. Die in der Einfügestelle ermittelte Kennzahl wird mit dem jeweiligen Serverrahmen zur Entnahmestelle mit übertragen und dort einem weiteren Sigma-Delta-Modulator zugeführt, der ein Clientbitsteuersignal zur Entnahme der Cliendaten aus dem gesamten Payloadbereich des Serversignals erzeugt. Hierdurch wird besonders vorteilhaft die Übertragung von Clientsignalen mit unterschiedlichen Übertragungsbitraten über ein Serversignal konstanter Übertragungsrate, ohne manuelle Einstellungen bzw. schaltungstechnische Änderungen in der Einfüge- und Entnahmestelle vorzusehen, ermöglicht. Des Weiteren wird durch die nahezu gleichmässige Verteilung der Clientdaten auf das Serversignal das Jitter/Wander-Verhalten reduziert und die Speicherkapazität der sowohl in der Einfügestelle als auch in der Entnahmestelle vorzusehenden Pufferspeichereinheiten verringert, wodurch eine kostengünstige Übertragung von mehreren Clientsignalen in einem Serversignal realisierbar wird.

Vorteilhaft weist das Serversignal eine Rahmenstruktur auf, wobei ein Rahmen jeweils in einen Overheadbereich und einen Payloadbereich aufgeteilt ist - Anspruch 2 - und die ermittelte Kennzahl im Overheadbereich des Serversignals übertragen wird - Anspruch 3. Besonders vorteilhaft wird somit der Overheadbereich für die Übertragung der jeweiligen Kennzahl vorgesehen. Des Weiteren wird durch die Übertragung der Kennzahl im Overheadbereich des Serversignals vorteilhaft eine rechtzeitige Ermittlung der Kennzahl in der Entnahmestelle durch die üblicherweise zeitlich vorrangige Auswertung des Overheadbereiches vor dem Payloadbereich des Serverrahmens sichergestellt.

Weitere vorteilhafte Ausgestaltungen des erfindungsgemäßen Verfahrens, insbesondere eine Anordnung zur Übertragung von mindestens einem Clientsignal innerhalb eines eine vorgegebene Übertragungsbitrate aufweisenden Serversignales, sind den weiteren Ansprüchen zu entnehmen.

Die Erfindung soll im folgenden anhand von fünf Prinzipschaltbildern näher erläutert werden.
- Figur 1: zeigt den prinzipiellen Aufbau eines digitalen Serversignals,
- Figur 2: zeigt in einem Prinzipschaltbild einen Sigma-Delta-Modulator zur Realisierung des erfindungsgemäßen Verfahrens,
- Figur 3: zeigt eine sendeseitig angeordnete erste Übertragungseinheit,
- Figur 4: zeigt eine empfangsseitig angeordnete zweite Übertragungseinheit und
- Figur 5: zeigt in einem weiteren Prinzipschaltbild einen modifizierten Sigma-Delta-Modulator zur Realisierung des erfindungsgemäßen Verfahrens für eine n-bit parallele Datenverarbeitung.

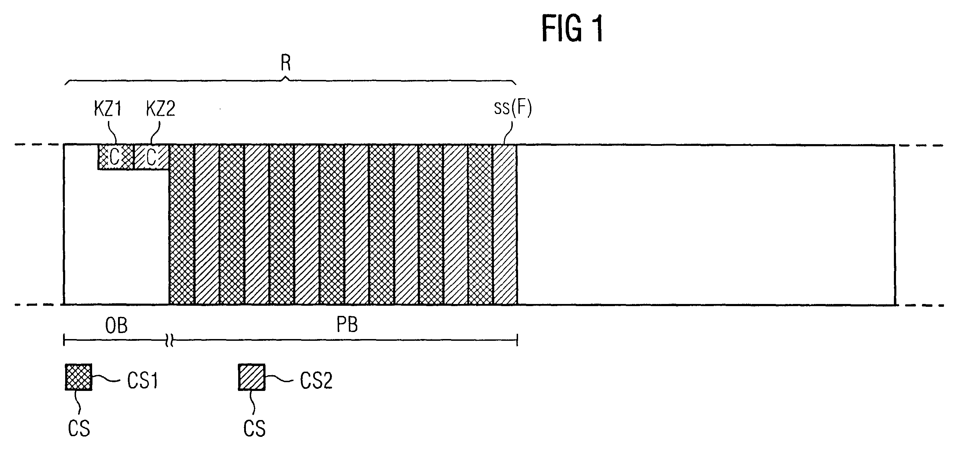

In Figur 1 ist beispielhaft ein digitales Serversignal ss mit der Bitrate F dargestellt, welches eine Rahmenstruktur, die aus einem Overheadbereich OB und einem Payloadbereich PB besteht, aufweist. Der Payloadbereich PB ist für die Übertragung der unterschiedlichen Clientsignale CS1, CS2 vorgesehen, d.h. die Daten des ersten Clientsignales CS1 und des zweiten Clientsignales CS2 werden in Payloadbereich PB des Serversignales ss eingefügt. Im Overheadbereich OB des Serversignals ss werden die zugehörigen Kennzahlen KZ1,KZ2 eingefügt. Bei dem in Figur 1 dargestellten Ausführungsbeispiel sind eine erste Kennzahl KZ1 und eine zweite Kennzahl KZ2 in den Overheadbereich OB des Serversignales ss beispielhaft eingefügt. Der Payloadbereich PB des Serversignales ss umfaßt P Bits und der Overheadbereich OB des Serversignales ss ist aus O Bits aufgebaut. Der Gesamtrahmen des Serversignals ss, bestehend aus Overheadbereich OB und Payloadbereich PB, weist somit P + 0 Bits auf. Für eine Clientbitrate f bzw. die Bitrate des jeweiligen Clientsignales CS1, CS2 ist es erforderlich pro Serverrahmen R eine Anzahl von c = f/F * (P+0) Clientbits in den Payloadbereich OB einzufügen bzw. innerhalb des Payloadbereiches OB zu übertragen. Da naturgemäß nur eine Übertragung von ganzzahligen Bits möglich ist, wird jeweils der ganzzahlige Anteil von der ermittelten Anzahl der c Clientbits C für die weitere Verarbeitung benutzt. Der hierdurch entstehende Fehler wird dadurch korrigiert, daß bei der Übertragung beispielsweise des folgenden Serverrahmens R der ganzzahlige Anteil der c Clientbits C um einen Zählwert erhöht wird und dieser Wert für die weitere Verarbeitung benutzt wird.

Als erste und zweite Kennzahl KZ1, KZ2 kann erfindungsgemäß beispielsweise die jeweilige ganzzahlige Clientbitanzahl C1, C2 gewählt werden, d.h. die jeweilige Kennzahl KZ1,KZ2 zeigt die im Payloadbereich PB übermittelbare Clientbitanzahl C1, C2 an. Bei mehreren Clientsignalen CS, insbesondere wie in Figur 1 angedeutet bei einem ersten und zweiten Clientsignal CS1, CS2, wird jedem einzelnen Clientsignal CS1, CS2 ein bestimmter Abschnitt des Payloadbereiches PB des Serverrahmens R zugeordnet, indem die Daten bzw. die Datenbits des ersten bzw. zweiten Clientsignales CS1, CS2 übertragen werden.

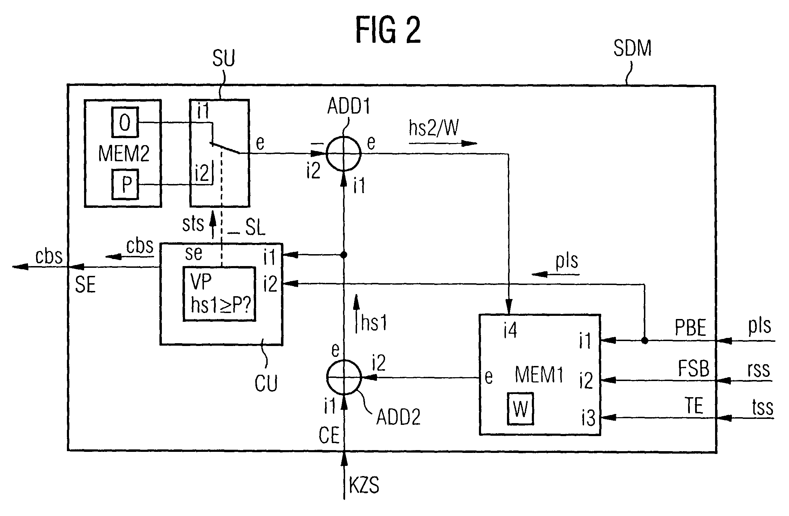

In Figur 2 ist in einem Prinzipschaltbild ein Sigma-Delta-Modulator SDM zur Realisierung des erfindungsgemäßen Verfahrens beispielhaft dargestellt, der eine erste und zweite Speichereinheit MEM1, MEM2, einen ersten und zweiten Addierer ADD1, ADD2 sowie eine Schalteinheit SU und eine Vergleichseinheit CU aufweist. Des Weiteren weist der Sigma-Delta-Modulator SDM einen Payloadeingang PBE, einen Rahmenstarteingang FSB, einen Takteingang TE sowie einen Kennzahleingang CE und einen Clientbitsteuerausgang SE auf. Der Kennzahleingang CE ist an den ersten Eingang i1 des zweiten Addierers ADD2 angeschlossen. Desweiteren ist der Ausgang e des zweiten Addierers ADD2 an den ersten Eingang i1 der Vergleichseinheit CU sowie an den ersten Eingang i1 des ersten Addierers ADD1 angeschlossen. Der zweite Eingang i2 des zweiten Addierers ADD2 ist mit dem Ausgang e der ersten Speichereinheit MEM1 verbunden. Der Payloadeingang PBE, der Rahmenstarteingang FSB sowie der Takteingang TE sind mit dem ersten bzw. zweiten bzw. dritten Eingang i1, i2, i3 der ersten Speichereinheit MEM1 verbunden.

Des Weiteren ist der vierte Eingang i4 der ersten Speichereinheit MEM1 mit dem Ausgang e des ersten Addierers ADD1 verbunden. Der Ausgang e der Schalteinheit SU ist an den zweiten Eingang i2 des ersten Addierers ADD1 angeschlossen. Zusätzlich ist die Schalteinheit SU über eine Steuerleitung SL mit dem Steuereingang se der Vergleichseinheit CU verbunden. Der erste Eingang i1 der Schalteinheit SU ist mit der zweiten Speichereinheit MEM2 verbunden und es liegt ein in der zweiten Speichereinheit MEM2 abgelegtes logisches Nullsignal 0 an. Der zweite Eingang i2 der Schalteinheit SU ist mit der zweiten Speichereinheit MEM2 verbunden, in der die Anzahl P der Payloadbits abgelegt bzw. gespeichert ist. Schließlich ist der Payloadeingang PBE mit dem zweiten Eingang i2 der Vergleichseinheit CU verbunden.

An den Takteingang TE des Sigma-Delta-Modulators SDM wird der Takt des Serversignales bzw. das Servertaktsignal tss gesteuert und an die erste Speichereinheit MEM1 übertragen. Im folgenden wird der Wert W am Eingang i4 mit dem Takt des Serversignales tss in die ersten Speichereinheit MEM1 eingelesen, vorausgesetzt das über den Payloadeingang PBE der ersten Speichereinheit MEM1 zugeführte Payloadsignal pls ist aktiv. Desweiteren wird mit Hilfe des Rahmenstartsignales rss, welches an den Rahmenstarteingang FSB gesteuert wird, dem Sigma-Delta-Modulator SDM mitgeteilt, wann ein neuer Rahmen R innerhalb des Serversignales ss beginnt. Hierzu wird das Rahmenstartsignal rss an die erste Speichereinheit MEM1 übertragen. Des Weiteren wird der Start eines Serverrahmens R des Serversignales ss durch das Rahmenstartsignal rss dem Sigma-Delta-Modulator SDM angezeigt und hierdurch ein in der ersten Speichereinheit MEM1 gespeicherter Wert W auf den Wert 0 gesetzt, d.h. der Speicherinhalt W wird gelöscht.

Am Payloadeingang PBE des Sigma-Delta-Modulators SDM liegt ein Payloadsignal pls an, das an die erste Speichereinheit MEM1 und an die Vergleichseinheit CU übertragen wird. Das Payloadsignal pls zeigt den Payloadbereiches PB innerhalb eines Serverrahmens R des Serversignales ss an, d.h. bei einer aktuellen Übertragung des Payloadbereiches PB ist das Payloadsignal pls aktiv. Zusätzlich wird durch das Payloadsignal pls in der Vergleichseinheit CU eine Vergleichsprozedur VP gestartet. Der in der ersten Speichereinheit MEM1 abzuspeichernde Wert W wird vom ersten Addierer ADD1 an den vierten Eingang i4 der ersten Speichereinheit MEM1 übertragen und in dieser mit dem Takt des Serversignals tss während der Übertragung des Payloadbereiches PB gespeichert. Der Wert W liegt beispielsweise konstant am Ausgang e der ersten Speichereinheit MEM1 an und wird an den zweiten Eingang i2 des zweiten Addierers ADD2 übertragen.

Des Weiteren wird das am Kennzahleingang CE anliegende Kennzahlsignal kzs und somit die Kennzahl KZ über den Kennzahleingang CE des Sigma-Delta-Modulators SDM an den ersten Eingang i1 des zweiten Addierers ADD2 übermittelt. Mit Hilfe des zweiten Addierers ADD2 wird das Kennzahlsignal kzs bzw. die Kennzahl KZ und der Wert W der ersten Speichereinheit MEM1 addiert und das in einem ersten Hilfssignal hs1 zusammengefaßte Ergebnis der Addition über den Ausgang e des zweiten Addierers ADD2 an den ersten Eingang i1 des ersten Addierers ADD1 sowie an den ersten Eingang i1 der Vergleichseinheit CU übertragen.

In der Vergleichseinheit CU werden mit Hilfe der Vergleichsprozedur VP das aus der Addition der Kennzahl KZ und des Wertes W erzeugte erste Hilfssignal hs1 mit dem in der zweiten Speichereinheit MEM2 abgelegten Wert P, der die Anzahl der Bits des Payloadbereiches PB anzeigt, verglichen und anhand des Vergleichsergebnisses ein Steuersignal sts in der Vergleichseinheit CU erzeugt und über die Steuerleitung SL an die Schalteinheit SU übertragen. Mit Hilfe des Steuersignales sts wird in der Schalteinheit SU entweder der erste Eingang i1 oder der zweite Eingang i2 auf den Ausgang e der Schalteinheit SU durchgeschaltet. In Figur 2 liegt beispielsweise am ersten Eingang i1 kein Signal bzw. der logische 0 Wert an und am zweiten Eingang i2 der Wert für die Anzahl der den Payloadbereich umfassenden Bits P an. Das über die Schalteinheit SU ausgewählte Signal bzw. der ausgewählte Wert 0 oder P wird an den zweiten Eingang i2 des ersten Addierer ADD1 übertragen, wobei innerhalb des ersten Addierers ADD1 dem am zweiten Eingang i2 des Addierer ADD1 anliegenden Signal bzw. dem anliegenden Wert O bzw. P für die Addition ein negatives Vorzeichen zugeordnet wird. Im ersten Addierer ADD1 wird nun zu dem ersten Hilfssignal hs1 der ein negatives Vorzeichen aufweisende Wert 0 oder P addiert und ein zweites Hilfssignal hs2 erzeugt. Das zweite Hilfssignal bzw. der Wert des zweiten Hilfssignals hs2 stellt den neuen in der Speichereinheit abzuspeichernden Wert W dar, der somit vom Ausgang e des ersten Addierers ADD1 an den vierten Eingang i4 der ersten Speichereinheit MEM1 übertragen und in dieser gespeichert wird.

Am Clientbitsteuerausgang se der Vergleichseinheit CU wird ein Clientbitsteuersignal cbs abgegeben, daß zuvor gemäß dem Vergleichsergebnis zwischen dem ersten Hilfssignal hsl bzw. dem ersten Hilfswert hs1 und der Payloadbitanzahl P bzw. der Anzahl der Bits P des Payloadbereiches OB mit Hilfe der Vergleichsprozedur VP erzeugt wird. Des Weiteren wird die Vergleichsprozedur VP zur Erzeugung sowohl des Clientbitsteuersignals PBS als auch des Steuersignales SPS zu dem Zeitpunkt durchgeführt, an dem durch das vom Payloadeingang PBE übertragene Payloadsignal pls der Vergleichseinheit CU anzeigt, daß im aktuellen Status der Datenübertragung der Payloadbereich PB betrachtet wird. Gemäß dem in Figur 2 dargestellten Sigma-Delta-Modulator SDM wird zum Zeitpunkt jedes Payloadbits zum Speicherinhalt W der ersten Speichereinheit MEM1 bzw. dem Wert W der ersten Speichereinheit MEM1 das Kennzahlsignal bzw. die Kennzahl KZS mit Hilfe des zweiten Addierers ADD2 addiert. In der Vergleichseinheit CU wird mit Hilfe der Vergleichsprozedur VP des Weiteren festgestellt, ob die Anzahl der Payloadbits P kleiner oder gleich dem Wert des ersten Hilfssignales hs1 bzw. des ersten Hilfssignalwertes hs1 ist. Trifft dies zu, so wird mit Hilfe der Vergleichsprozedur VP ein Clientbitsteuersignales cbs erzeugt, daß eine Übertragung eines Clientbits an der betrachtenden Payloadbitposition nicht möglich ist. Ist beispielsweise die Bitrate P kleiner als oder gleich dem ersten Hilfssignalwert hsl, dann wird durch das in der Vergleichseinheit CU erzeugte Steuersignal sts die Schalteinheit SU derartig angesteuert, daß an den zweiten Eingang i2 der Wert P der Anzahl der Payloadbits gesteuert wird und dieser mit Hilfe des ersten Addierers ADD1 von dem ersten Hilfssignal hsl bzw. dem ersten Hilfssignalwert hs1 subtrahiert wird. Der Wert der Subtraktion bzw. das Ergebnis wird im folgenden als zweites Hilfssignal hs2 bzw. zweiter Hilfssignalwert hs2 vom Ausgang e des ersten Addierers ADD1 an den vierten Eingang i4 der ersten Speichereinheit MEM1 übertragen und dort als neuer Speicherwert W gespeichert.

Zusätzlich wird in der Vergleichseinheit CU mit Hilfe der Vergleichsprozedur VP ein aktives Clientbitsteuersignal cps erzeugt, welches anzeigt, daß ein Clientbit an der betrachteten Payloadbitposition des Payloadbereiches PB übertragen werden soll. Ist der Wert P der Anzahl der Payloadbits größer als der erste Hilfssignalwert hs1, dann wird durch das in der Vergleichseinheit CU erzeugte Steuersignal sts die Schalteinheit SU derartig angesteuert, daß an den zweiten Eingang i2 der Wert 0 gesteuert wird und dieser mit Hilfe des ersten Addierers ADD1 von dem ersten Hilfssignal hs1 bzw. dem ersten Hilfssignalwert hs1 subtrahiert wird. Das Ergebnis der Subtraktion wird im folgenden als zweites Hilfssignal hs2 bzw. zweiter Hilfssignalwert hs2 vom Ausgang e des ersten Addierers ADD1 an den vierten Eingang i4 der ersten Speichereinheit MEM1 übertragen und dort als neuer Speicherwert bzw. Wert W gespeichert. Zusätzlich wird in der Vergleichseinheit CU mit Hilfe der Vergleichsprozedur VP ein inaktives Clientbitsteuersignal cps erzeugt, welches anzeigt, daß kein Clientbit an der betrachteten Payloadbitposition des Payloadbereiches PB übertragen werden soll.

Mit Hilfe des erfindungsgemäßen Sigma-Delta-Modulators SDM werden die Kennzahlen KZ bzw. die Anzahl der im Payloadbereich PB des Serversignales ss übermittelbaren Clientbits C über den Payloadbereich PB gleichmäßig verteilt. Hierdurch wird das Jitter-/Wanderverhalten des Übertragungssystems verbessert sowie die Speicherkapazität der innerhalb des Übertragungssystems vorzusehenden Pufferspeicher vorteilhaft verringert. Beim Start eines neuen Serverrahmens R, der durch das Rahmenstartsignal rss der ersten Speichereinheit MEM1 bzw. dem Sigma-Delta-Modulator SDM angezeigt wird, wird gemäß der Erfindung der Speicherinhalt W zurückgesetzt, d.h. der Speicherinhalt W wird gelöscht bzw. mit dem Wert 0 überschrieben.

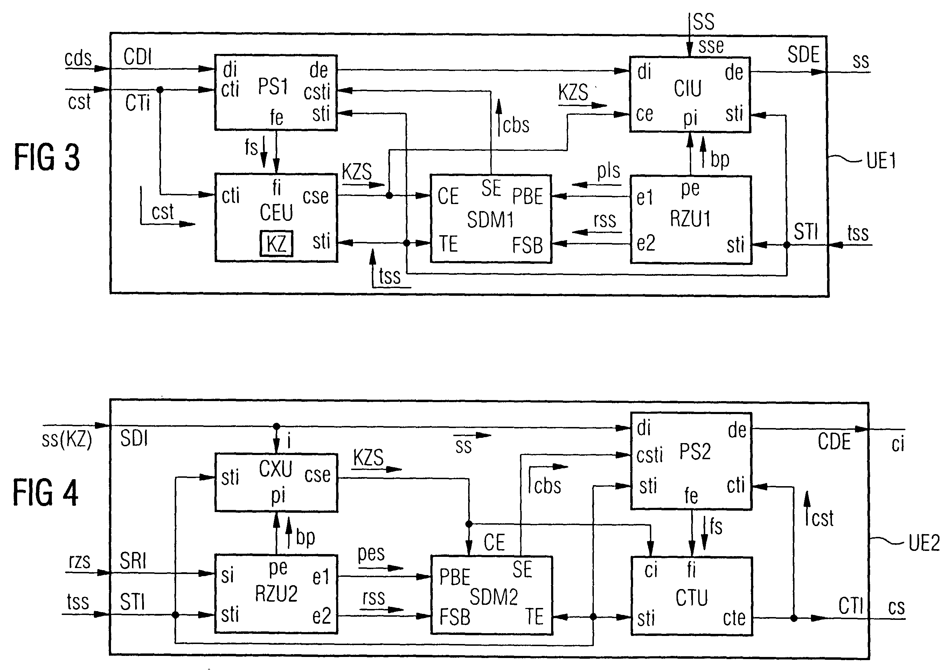

In Figur 3 ist beispielhaft in einem Prinzipschaltbild die erfindungsgemäße erste Übertragungseinheit UE1, insbesondere eine Sendeeinheit, dargestellt, die eine erste Pufferspeichereinheit PS1, eine Kennzahlermittlungseinheit CEU, einen ersten Sigma-Delta-Modulator SDM1, beispielsweise den in Figur 2 dargestellten Sigma-Delta-Modulator SDM, sowie eine erste Rahmenzählereinheit RZU1 und eine Kennzahleinfügeeinheit CIU aufweist. Die erste Pufferspeichereinheit PS1 weist einen Dateneingang di einen Datenausgang de, einen Füllstandsausgang fe, einen Clienttakteingang cti sowie einen Servertakteingang sti und einen Clientbitsteuereingang csti auf. Die Kennzahlermittlungseinheit CEU besitzt einen Clienttakteingang cti, einen Füllstandseingang fi, einen Kennzahlsignalausgang cse sowie einen Servertakteingang sti. Des Weiteren verfügt die Kennzahleinfügeeinheit CIU über einen Dateneingang di, einen Positionierungsausgang pi, einen Datenausgang de, einen Kennzahleingang ce und einen Servertakteingang sti. Analog zu der Figurenbeschreibung zu Figur 2 weist der erste Sigma-Delta-Modulator SDM1 einen Kennzahleingang CE, einen Servertakt bzw. Takteingang TE, einen Clientbitsteuerausgang SE sowie einen Payloadeingang PBE und einen Rahmenstarteingang FSB auf. Die erste Rahmenzählereinheit RZU1 hat einen ersten Ausgang e1, einen zweiten Ausgang e2 sowie einen Servertakteingang sti und einen Positionierungsausgang pe. Des Weiteren weist die erste Übertragungseinheit UE1 einen Clientdateneingang CDI, einen Clienttakteingang CTI, einen Serverdatenausgang SDE sowie einen Servertakteingang STI auf.

Der Clientdateneingang CDI der ersten Übertragungseinheit UE1 ist an den Dateneingang di der ersten Pufferspeichereinheit PS1 angeschlossen. Desweiteren ist der Clienttakteingang CDI an den Clienttakteingang cti der ersten Pufferspeichereinheit PS1 und an den Clienttakteingang cti der Kennzahlermittlungseinheit CEU geführt. Der Serverdatenausgang SDE ist mit dem Datenausgang de der Kennzahleinfügeeinheit CIU verbunden. Der Servertakteingang STI der ersten Übertragungseinheit UE1 ist an den Servertakteinang sti der Kennzahleinfügeeinheit CIU sowie der ersten Rahmenzähleinheit RZU1 als auch der Kennzahlermittlungseinheit CEU und der ersten Pufferspeichereinheit PS1 angeschlossen sowie an den Takteingang TE des ersten Sigma-Delta-Modulators SDM1 geführt. Der Datenausgang de der ersten Pufferspeichereinheit PS1 ist mit dem Dateneingang di der Kennzahleinfügeeinheit CIU verbunden. Des Weiteren ist der Kennzahlausgang cse der Kennzahlermittlungseinheit CEU an den Kennzahleingang CE des ersten Sigma-Delta-Modulators SDM1 sowie an den Kennzahleingang ce der Kennzahleinfügeeinheit CEU angeschlossen. Der erste bzw. zweite Ausgang e1,e2 der ersten Rahmenzählereinheit RZU1 ist an den Payloadeingang PBE bzw. den Rahmenstarteingang FSB des ersten Sigma-Delta-Modulators SDM1 angeschlossen. Der Clientbitsteuerausgang SE des ersten Sigma-Delta-Modulators SDM1 ist mit dem Clientbitsteuereingang csti der ersten Pufferspeichereinheit PS1 verbunden und der Füllstandsausgang fe der ersten Pufferspeichereinheit PS1 an den Füllstandseingang fi der Kennzahlermittlungseinheit CEU angeschlossen.

An dem Clientdateneingang CDI der ersten Übertragungseinheit UE1 wird das Clientdatensignal cds und an dem Clienttakteingang CTI der Clientsignaltakt cst empfangen. Das Clientsignal bzw. Clientdatensignal cds wird vom Clientdateneingang CDI an den Dateneingang di der ersten Pufferspeichereinheit PS1 übertragen und in der Pufferspeichereinheit PS1 zwischengespeichert. Des Weiteren wird der Clientsignaltakt cts, der am Clienttakteingang CTI der ersten Übertragungseinheit UE1 anliegt, an die erste Pufferspeichereinheit PS1 sowie an die Kennzahlermittlungseinheit CEU übertragen. Zusätzlich wird das am Servertakteingang STI anliegende Servertaktsignal tss an die Kennzahleinfügeeinheit CEU, an die erste Rahmenzählereinheit RZU1, an den ersten Sigma-Delta-Modulator SDM1 an die Kennzahlermittlungseinheit CEU sowie an die erste Pufferspeichereinheit DS1 übertragen. Anhand den in der ersten Pufferspeichereinheit PS1 gespeicherten Clientdaten wird der Füllstand des ersten Pufferspeichers bzw. der ersten Pufferspeichereinheit PS1 ermittelt und ein Füllstandsanzeigesignal fs in der ersten Pufferspeichereinheit PS1 erzeugt sowie über den Füllstandsausgang fe an den Füllstandseingang fi der Kennzahlermittlungseinheit CEU übertragen. In der der Kennzahlermittlungseinheit CEU wird anhand des Füllstandsanzeigesignals fs sowie des Clienttaktsignals cti und des Servertaktssignales sti die erfindungsgemäße Kennzahl KZ berechnet bzw. ermittelt. Hierbei wird beispielsweise zur näherungsweisen Ermittlung der Kennzahl KZ das Verhältnis aus der Clientbitrate f zur Serverbitrate F mal die Summe der Bits des Overheadbereiches OB und des Payloadbereiches PB herangezogen, welche eine einen ganzzahligen Anteil aufweisende Kennzahl KZ ergibt. Zur exakten Ermittlung der Kennzahl KZ wird beispielsweise das Füllstandsanzeigesignal fs ausgewertet, wobei bei einem zu hohen Füllstand der ersten Pufferspeichereinheit PS1 die Kennzahl KZ erhöht und bei einem zu niedrigen Füllstand der ersten Pufferspeichereinheit PS1 die Kennzahl KZ erniedrigt wird.

Die derart ermittelte Kennzahl KZ bzw. das Kennzahlsignal kzs wird an dem Kennzahleingang CE des ersten Sigma-Delta-Modulators SDM1 und an den Kennzahleingang ce der Kennzahleinfügeeinheit CIU übermittelt. Im erfindungsgemäßen ersten Sigma-Delta-Modulator SDM1 wird - wie im Ausführungsbeispiel zu Figur 2 beschrieben - mit Hilfe des im ersten Sigma-Delta-Modulator SDM1 ausgewerteten Kennzahlsignales kzs ein Clientsteuerbitsignal cbs ermittelt, welches am Clientbitausgang SE des ersten Sigma-Delta-Modulators SDM1 anliegt und dem Clientbitsteuereingang csti der ersten Pufferspeichereinheit PS1 zugeführt wird. Gesteuert durch das Clientbitsteuersignal cbs wird ein in der ersten Speichereinheit PS1 gespeichertes Clientbit des Clientsignales cds in die aktuell betrachtete Bitposition des Payloadbereiches PB eingefügt oder nicht. Dieses erfindungsgemäße Verfahren dient zur nahezu gleichmäßigen Verteilung der Clientbits bzw. der beispielsweise durch die Kennzahl KZ angegebenen Anzahl von Clientbits über den gesamten Payloadbereich PB. Der derartig aufgefüllte Payloadbereich PB des Serversignals ss wird an die Kennzahleinfügeeinheit CIU übertragen. In der Kennzahleinfügeeinheit CIU wird, vorzugsweise in den Overheadbereich OB, die Kennzahl KZ in das über einen Serversignaleingang sse der Kennzahleinfügeeinheit CIU zugeführte Serversignal ss eingefügt und das Serversignal ss vom Datenausgang de der Kennzahleinfügeeinheit CIU an den Serverdatenausgang SDE der ersten Übertragungseinheit UE1 übertragen. Die zur erfindungsgemäßen Realisierung bzw. Erzeugung des Clientbitsteuersignales cbs in dem ersten Sigma-Delta-Modulator SDM1 erfoderliche Payloadbereichssignal pls und Rahmenstartsignal rss werden mit Hilfe der ersten Rahmenzählereinheit RZU1 und des Servertaktsignales tss erzeugt und an den Payloadeingang PBE sowie an den Rahmenstarteingang FSB des ersten Sigma-Delta-Modulators SDM1 gesteuert. Zusätzlich wird die Bitposition bp der beispielsweise in den Overheadbereich OB des Serversignales ss einzufügenden Kennzahl KZ in der ersten Rahmenzählereinheit RZU1 ermittelt und über den Positionierungsausgang pe an den Positionierungseingang pi der Kennzahleinfügeeinheit CIU übermittelt.

Das Serversignal ss mit der eingefügten Kennzahl KZ wird über beispielsweise eine optische Faser OF - in Figur 3 nicht dargestellt - zu einer zweiten Übertragungseinheit UE2, beispielsweise eine Empfangseinheit, übertragen.

In Figur 4 ist beispielhaft ein Prinzipschaltbild einer zweiten Übertragungseinheit UE2, insbesondere einer Empfangseinheit, dargestellt, die eine zweite Pufferspeichereinheit PS2 eine Kennzahlentnahmeeinheit CXU, eine zweite Rahmenzählereinheit RZU2, einen zweiten Sigma-Delta-Modulator SDM2 sowie eine Clienttaktermittlungseinheit CTU aufweist. Die zweite Pufferspeichereinheit PS2 weist einen Dateneingang di, einen Datenausgang de, einen Clientbitsteuereingang csti, einen Servertakteingang sti sowie einen Clienttakteingang cti und einen Füllstandsausgang fe auf. Des Weiteren besitzt die Clienttaktermittlungseinheit CTU einen Füllstandseingang fi, einen Kennzahleingang ci, einen Servertakteingang sti und einen Cienttaktausgang cte. Der zweite Sigma-Delta-Modulator SDM2 ist analog zu dem in Figur 3 dargestellten ersten Sigma-Delta-Modulator SDM1 mit einem Kennzahleingang CE, einem Clientbitsteuerausgang SE, einen Servertakteingang TE sowie einen Payloadeingang PBE als auch einen Rahmenstarteingang FSB ausgestattet. Die zweite Rahmenzählereinheit RZU2 weist einen ersten Ausgang e1 und einen zweiten Ausgang e2 sowie einen Positionierungsausgang pe, einen Steuereingang si und einen Servertakteingang sti auf. Bei der Kennzahlentnahmeeinheit CXU ist ein Servertakteingang sti, ein Eingang i sowie ein Positionierungseingang pi und ein Kennzahlausgang cse vorgesehen. Die zweite Übertragungseinheit UI2 weist einen Serverdateneingang SDI, einen Steuereingang SRI, einen Servertakteingang STI sowie einen Clientdatenausgang CDE als auch einen Clienttaktausgang CTI auf.

An den Serverdateneingang SDI ist der Eingang i der Kennzahlentnahmeeinheit CXU sowie der Dateneingang di der zweiten Pufferspeichereinheit PS2 angeschlossen. Der Clientdatenausgang CDE ist mit den Datenausgang de der zweiten Pufferspeichereinheit PS2 verbunden. Des Weiteren ist der Steuertakteingang STI an den Steuereingang si der zweiten Rahmenzählereinheit RZU2 und an den Servertakteingang sti der zweiten Rahmenzählereinheit RZU2 angeschlossen, wobei der Servertakteingang STI zusätzlich mit dem Servertakteingang sti der Kennzahlentnahmeeinheit CXU, dem Takteingang TE des zweiten Sigma-Delta-Modulators SDM2, dem Servertakteingang sti der Clienttaktermittlungseinheit CTU und mit dem Servertakteingang sti der zweiten Pufferspeichereinheit PS2 verbunden ist.

Der Kennzahlsignalausgang cse der Kennzahlentnahmeeinheit CXU ist mit dem Kennzahleingang CE des zweiten Sigma-Delta-Modulators SDM2 verbunden. Der erste bzw. zweite Ausgang e1, e2 der zweiten Rahmenzählereinheit RZU2 ist mit dem Payloadeingang PBE bzw. mit dem Rahmenstarteingang FSB des zweiten Sigma-Delta-Modulators SDM2 verbunden. Darüber hinaus ist der zweite Sigma-Delta-Modulator SDM2 über den Clientbitsteuerausgang SE mit dem Clientbitsteuereingang csti der zweiten Pufferspeichereinheit PS2 verbunden. Der Füllstand der zweiten Pufferspeichereinheit PS2 wird über den Füllstandsausgang fe der zweiten Pufferspeichereinheit PS2 an den Füllstandeingang fi der Clienttaktermittlungseinheit CTU übermittelt. Des Weiteren ist der Clienttaktausgang cte der Clienttaktermittlungseinheit CTU mit dem Clienttakteingang cti der zweiten Pufferspeichereinheit PS2 verbunden.

Das am Serverdateneingang SDI empfangene Serversignal ss wird an die Kennzahlentnahmeeinheit CXU sowie an den Dateneingang di der Pufferspeichereinheit PS2 übertragen und in der zweiten Pufferspeichereinheit PS2 zwischengespeichert. Mit Hilfe der Kennzahlentnahmeeinheit CXU wird die Kennzahl KZ bzw. das Kennzahlsignal KZS an der durch die von der zweiten Rahmenzählereinheit RZU ermittelten Bitposition bp des Serversignals ss ausgelesen und vom Kennzahlsignalausgang CSE an den Kennzahlsignaleingang CE des zweiten Sigma-Delta-Modulators SDM2 übertragen, d.h. im zweiten Sigma-Delta-Modulator SDM2 liegt die aktuelle Kennzahl KZ für die aktuell betrachteten Bitpositionen des Payloadbereiches PB vor.

Die Übertragung der Kennzahl KZ von der ersten Übertragungseinheit UE1 zur zweiten Übertragungseinheit UE2 dient zur Synchronisierung des ersten und zweiten Sigma-Delta-Modulators SDM1, SDM2, d.h. der in der ersten Übertragungseinheit UE1 angeordnete erste Sigma-Delta-Modulator SDM1 wird synchron zu dem in der zweiten Übertragungseinheit UE2 angeordneten zweiten Sigma-Delta-Modulator SDM2 betrieben. Hierzu wird erfindungsgemäß jedem Rahmen die erfindungsgemäße Kennzahl KZ zugeordnet und von der ersten Übertragungseinheit UE1 an die zweite Übertragungseinheit UE2 mitübermittelt sowie in der zweiten Übertragungseinheit UI2 - siehe Figur 4 - zur Entnahme der Clientdaten bzw. des Clientsignales cds aus dem Serversignal ss mit Hilfe an den zweiten Sigma-Delta-Modulators SDM2 gesteuert.

An den Steuereingang SRI der zweiten Übertragungseinheit UE2 wird ein Rahmenzählersteuersignal rse gesteuert, welches an den Steuereingang si der zweiten Rahmenzählersteuereinheit RZU2 übertragen wird. Des Weiteren wird das Servertaktsignal tss an dem Servertakteingang STI der zweiten Übertragungseinheit UE2 empfangen und an den Servertakteingang sti der Kennzahlentnahmeeinheit CXU, an den Servertakteingang sti der zweiten Rahmenzählereinheit RZU2, an den Servertakteingang sti der Clienttaktermittlungseinheit CTU sowie an den Servertakteingang sti der zweiten Pufferspeichereinheit PS2 und den Takteingang TE des zweiten Sigma-Delta-Modulators SDM2 gesteuert. Das in der zweiten Rahmenzählereinheit RZU2 erzeugte Payloadsignal pls bzw. das Rahmenstartsignal rss wird vom ersten bzw. zweiten Ausgang e1,e2 der zweiten Rahmenzählereinheit RZU2 an den Payloadeingang PBE bzw. den Rahmenstarteingang fsb des zweiten Sigma-Delta-Modulators SDM2 übertragen. Zusätzlich wird die Bitposition bp der beispielsweise in dem Overheadbereich OB des Serversignales ss eingefügten Kennzahl KZ in der zweiten Rahmenzählereinheit RZU2 ermittelt und über den Positionierungsausgang pe an den Positionierungseingang pi der Kennzahlentnahmeeinheit CXU übermittelt.

Des Weiteren wird erfindungsgemäß durch den zweiten Sigma-Delta-Modulator SDM2 ein Clientbitsteuersignal cbs erzeugt und zur Steuerung der Entnahme der Clientbits aus dem in der zweiten Pufferspeichereinheit PS2 gespeicherten Serversignals ss an den Clientbitsteuereingang csti der zweiten Pufferspeichereinheit PS2 übermittelt. Darüber hinaus wird durch die Clienttaktermittlungseinheit CTU unter Auswertung der Kennzahl KZ bzw. des Kennzahlsignales KZS, des durch die zweite Pufferspeichereinheit erzeugten und übermittelten Füllstandssignals fs und unter Berücksichtigung des Servertaktsignales tss das Clientsignaltakt cst rückgewonnen sowie an den Clienttaktausgang CTI der zweiten Übertragungseinheit UE2 als auch an den Clienttakteingang cti der zweiten Pufferspeichereinheit PS2 übertragen.

In der zweiten Speichereinheit PS2 wird gemäß des durch den zweiten Sigma-Delta-Modulator SDM2 ermittelten Clienbitsteuersignales cbs an der aktuellen Bitposition des Payloadbereiches PB des Serversignals ss das Clientbit entnommen und beispielsweise die entnommen Clientbits zu dem ursprünglichen Clientsignal cds zusammengefaßt, welches über den Datenausgang de der zweiten Pufferspeichereinheit PS2 an den Clientdatenausgang CDE der zweiten Übertragungseinheit gesteuert wird.

Zum erfindungsgemäßen Einfügen von mehreren Clientsignalen CS1,CS2 in den Payloadbereich PB des Serversignals ss ist pro Clientsignal jeweils eine Anordnung gemäß den Figuren 3 und 4, d.h. eine erste Übertragungseinheit UE2 und eine zweite Übertragungseinheit UE2 vorzusehen. Hierbei wird jedem Clientsignal CS1,CS2 ein individuell wählbarer Abschnitt des Payloadbereichs PB zugeordnet, über den mit Hilfe des jeweiligen Sigma-Delta-Modulators SDM die Daten des jeweiligen Clientsignals nahezu gleichmäßig verteilt werden.

Des Weiteren wird die Kennzahl KZ für die Übertragung durch einen Sicherheitsmechanismus geschützt, d.h. beispielsweise kann die Kennzahl KZ vor Ihrer Übertragung innerhalb des Serversignals ss empfangsseitig verschlüsselt werden oder eine Quecksumme gebildet und mitübermittelt werden. Die derartig verschlüsselte Kennzahl KZ wird empfangsseitig vor ihrer Weiterverarbeitung entschlüsselt oder die fehlerfreie Übertragung der Kennzahl KZ wird mit Hilfe der mitübermittelten Quecksumme überprüft - nicht in den Figuren 1 bis 4 dargestellt.

Bei hohen Übertragungsbitraten erfolgt die Verarbeitung des Clientdatensignales cds bzw. des Serversignales ss in der sendeseitig bzw. empfangsseitig angeordneten ersten bzw. zweiten Übertragungseinheit UE1, UE2 nicht bit-seriell sondern n-bit parallel, d.h. es werden in einem Servertaktzyklus n Bits des Clientdatensignales cds bzw. des Serversignales ss gleichzeitig weiterverarbeitet. Hierdurch wird eine Reduzierung des Verarbeitungstaktes der ersten und zweiten Übertragungseinheit UE1,UE2 um den Faktor n möglich.

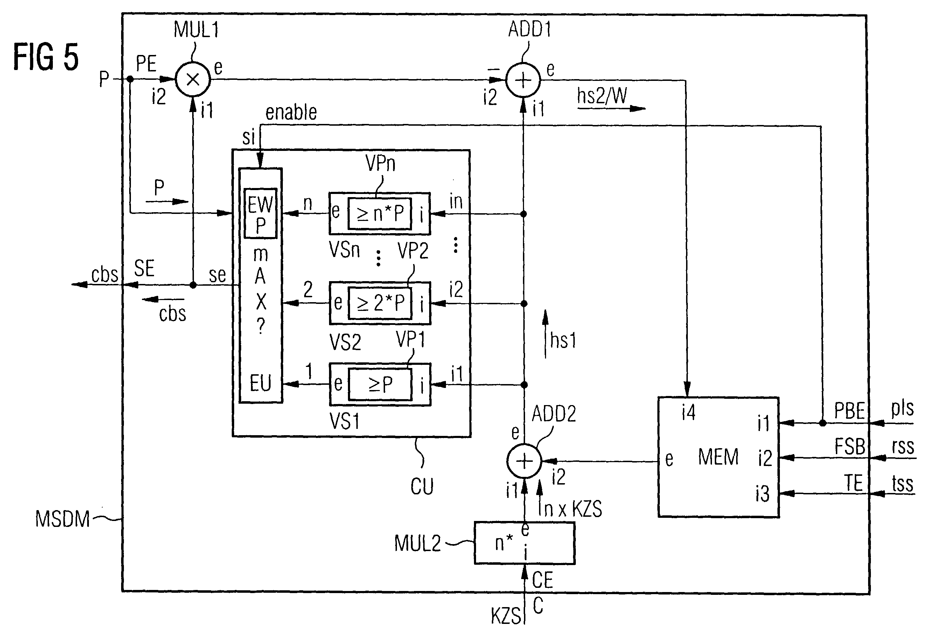

Zur Verarbeitung derartiger n-Bit parallelen Datenstrukturen, beispielsweise n=8 -> 1 Byte, in der ersten und zweiten Übertragungseinheit UE1,UE2 ist ein modifizierter Sigma-Delta-Modulator MSDM erforderlich, der in einem Prinzipschaltbild beispielhaft in Figur 5 dargestellt ist. Der erfindungsgemäße modifzierte Sigma-Delta-Modulator MSDM weist eine Speichereinheit MEM, einen ersten und zweiten Addierer ADD1, ADD2, einen ersten und zweiten Multiplizierer MUL1, MUL2 und eine Vergleichseinheit CU auf, wobei in der Vergleichseinheit CU ein bis n-te Vergleichsstufen VS1 bis VSn und eine Extremwertermittlungseinheit EU angeordnet sind. Der erfindungsgemäße modifizierte Sigma-Delta-Modulator MSDM weist einen Payloadbiteingang PE, einen Payloadloadbereicheingang PBE, einen Rahmenstarteingang FSB, einen Takteingang TE sowie einen Kennzahleingang KE und einen Clientbitsteuerausgang SE auf.

Der Kennzahleingang KE ist an den Eingang i des zweiten Multiplizierers MUL2 angeschlossen und der Ausgang e des zweiten Multiplizierers MUL2 ist mit dem ersten Eingang i1 des zweiten Addierers ADD2 verbunden, dessen zweiter Eingang i2 an den Ausgang e der Speichereinheit MEM angeschlossen ist. Der Ausgang e des zweiten Addierers ADD2 ist jeweils an den ersten bis n-ten Eingang i1 bis in der Vergleichseinheit CU geführt und an den ersten Eingang i1 des ersten Addierers ADD1 angeschlossen. Der zweite Eingang i2 des ersten Addieres ADD1 ist an den Ausgang e des ersten Multiplizieres MUL1 geführt und der Ausgang e des ersten Addierers ADD1 ist an den vierten Eingang i4 der Speichereinheit MEM angeschlossen. Der erste, zweite und dritte Eingang i1 i2, i3 der Speichereinheit MEM ist an den Payloadbereicheingang PBE, den Rahmenstarteingang FSB und den Takteingang TE angeschlossen. Des Weiteren ist der Payloadbereicheingang PBE mit dem Steuereingang si der Vergleichseinheit CU verbunden. Der Steuerausgang se der Vergleichseinheit CU ist sowohl mit dem Clientsteuerausgang SE als auch mit dem ersten Eingang i1 des ersten Multiplizierers MUL1 verbunden, dessen zweiter Eingang i2 an den Payloadbiteingang PE des modifizierten Sigma-Delta-Modulators MSDM angeschlossen ist. Zusätzlich ist der Payloadbiteingang PE des modifizierten Sigma-Delta-Modulators MSDM an die Vergleichseinheit CU angeschlossen.

Analog zu dem in Figur 2 dargestelltem Sigma-Delta-Modulator SDM wird an den Takteingang TE des modifzierten Sigma-Delta-Modulators MSDM der Takt des Serversignals bzw. das Servertaktsignal tss geführt und an die Speichereinheit MEM übertragen. Gemäß des Servertaktsignales tss wird der am vierten Eingang i4 der Speichereinheit MEM anliegende Signalwert in die Speichereinheit MEM gelesen und gespeichert, vorausgesetzt das über den Payloadbereicheingang PBE der Speichereinheit MEM zugeführte Payloadsignal pls ist aktiv.

Des Weiteren wird mit Hilfe des Rahmenstartsignales rss, welches an den Rahmenstarteingang FSB gesteuert wird, dem modifizierten Sigma-Delta-Modulator MSDM mitgeteilt, wann ein neuer Rahmen R innerhalb des Serversignales ss beginnt. Hierzu wird das Rahmenstartsignal rss an die Speichereinheit MEM übertragen. Zusätzlich wird der Start eines Serverrahmens R des Serversignales ss durch das Rahmenstartsignal rss dem modifizierten Sigma-Delta-Modulator MSDM angezeigt und hierdurch ein in der Speichereinheit MEM gespeicherter Wert W auf den Wert 0 gesetzt, d.h. der Speicherinhalt W wird gelöscht.

Am Payloadbereicheingang PBE des modifizierten Sigma-Delta-Modulators MSDM liegt das Payloadsignal pls an, das an die Speichereinheit MEM und darüber hinaus an den Steuereingang si der Vergleichseinheit CU bzw. an dessen Extremwertermittlungseinheit EU übertragen wird. Das Payloadsignal pls zeigt den Payloadbereich PB innerhalb eines Serverrahmens R des Serversignales ss an, d.h. bei einer aktuellen Übertragung des Payloadbereiches PB des Serversignales ss ist das Payloadsignal pls aktiv geschaltet. Zusätzlich wird durch das Payloadsignal pls in der Extremwertermittlungseinheit EU der Vergleichseinheit CU eine Extremwertermittlungsprozedur EWP gestartet.

Der in der Speichereinheit MEM abzuspeichernde Wert W wird vom ersten Addierer ADD1 an den vierten Eingang i4 der Speichereinheit MEM übertragen und in dieser mit dem Takt des Serversignals tss während der Übertragung des Payloadbereiches PB gespeichert. Der Wertes W liegt beispielsweise konstant am Ausgang e der Speichereinheit MEM an und wird von dort an den zweiten Eingang i2 des zweiten Addierers ADD2 übertragen.

Des Weiteren wird das am Kennzahleingang CE anliegende Kennzahlsignal kzs und somit die Kennzahl KZ über den Kennzahleingang CE des modifizierten Sigma-Delta-Modulators MSDM an den Eingang i des zweiten Multiplizierers MUL2 geschaltet und im zweiten Multipliziere MUL2 mit dem Wert n, d.h. der Anzahl der parallel zu verarbeiteten Bits, multipliziert und vom Ausgang e des zweiten Multiplizierers MUL2 an den ersten Eingang i1 des zweiten Addierers ADD2 übermittelt. Mit Hilfe des zweiten Addierers ADD2 wird das mit n multiplizierte Kennzahlsignal n*kzs bzw. die Kennzahl n*KZ und der Wert W der Speichereinheit MEM addiert und das in einem ersten Hilfssignal hs1 zusammengefaßte Ergebnis der Addition über den Ausgang e des zweiten Addierers ADD2 an den ersten Eingang i1 des ersten Addierers ADD1 sowie an den ersten bis n-ten Eingang i1 bis in der Vergleichseinheit CU übertragen, wobei an den ersten bis n-ten Eingang i1 bis in die erste bis n-te Vergleichsstufe VS1 bis VSn der Vergleichseinheit CU angeschlossen ist.

In der Vergleichseinheit CU bzw. in der ersten bis n-ten Vergleichsstufe VS1 bis VSn werden mit Hilfe der ein bis n-ten Vergleichsprozedur VP1 bis VPn das aus der Addition der mit n multiplizierten Kennzahl n*KZ und des Wertes W erzeugte erste Hilfssignal hs1 mit dem von dem Payloadeingang PE zur Vergleichseinheit CU übertragenen Wert P, der die Anzahl der Bits des Payloadbereiches PB anzeigt, verglichen und das ein bis n-te Vergleichsergebnis an die Extremwertermittlungseinheit EU übertragen. Hierbei wird in der ersten Vergleichsstufe VS1 das erste Hilfssignal hs1 mit dem einfachen Wert P verglichen, in der zweiten Vergleichsstufe VS2 das erste Hilfssignal hs1 mit dem mit dem Faktor 2 multiplizierten Wert P verglichen. Dies wird über sämtliche Vergleichstufen VS1 bis VSn fortgesetzt, bis in der n-ten Vergleichsstufe VSn das erste Hilfssignal hs1 mit dem mit dem Faktor n multiplizierten Wert P verglichen wird, d.h. beispielsweise wird in der ersten Vergleichsstufe VS1 bei einem höheren oder gleichen Wert des ersten Hilfssignals hs1 im Vergleich mit dem die Anzahl der Bits des Payloadbereiches PB anzeigenden Wert P ein den Wert 1 umfassendes Vergleichsergebnis an die Extremwertermittlungseinheit EU übertragen. Analog hierzu wird bei einem den mit dem Faktor 2 multiplizierten Wert P gleichen oder höheren Wert des ersten Hilfssignales hs1 in der zweiten Vergleichsstufe VS2 das Vergleichsergebnis mit dem Wert 2 ermittelt und an die Extremwertermittlungseinheit EU übertragen. Auch in der n-ten Vergleichsstufe VSn wird das Vergleichsergebnis mit dem Wert n an die Extremwertermittlungseinheit EU übertragen, wenn der mit dem Faktor n multiplizierte Wert P gleich dem Wert des ersten Hilfssignales hs1 ist oder diesen unterschreitet. Des Weiteren gilt für die erste bis n-te Vergleichsstufe Vs1 bis VSn: liegt der Wert des ersten Hilfsignales hs1 unter dem jeweiligen Vielfachen des die Anzahl der Bits im Payloadbereich PB anzeigenden Wertes P, so wird von der jeweiligen Vergleichsstufe VS1 bis VSn als Vergleichsergebnis der Wert 0 an die Extremwertermittlungseinheit EU übertragen.

In der Extremwertermittlungseinheit EU wird mit Hilfe der Extremwertermittlungsprozedur EWP beispielsweise das Maximum der von der ersten bis n-ten Vergleichsstufe VS1 bis VSn übertragenen Vergleichsergebnisse ermittelt und über den Steuerausgang se als Clientbitsteuersignal cbs sowohl an den Clientsteuerausgang SE als auch an den ersten Eingang i1 des ersten Multiplizierers MUL1 übertragen.

Mit Hilfe des über den Steuereingang si zugeführten Payloadbereichssignales pls wird die Extremwertermittlungsprozedur EWP aktiv geschaltet, d.h. somit wird jeweils zu dem Zeitpunkt ein Clientbitsteuersignal cbs in der Vergleichseinheit CU gebildet, an dem aktuell der Payloadbereich PB des Serversignales ss durch das erfindungsgemäße Verfahren ausgewertet wird.

Im ersten Multplizierer MUL1 wird das Produkt des am zweiten Eingang i2 empfangenen, die Anzahl der Bits des Payloadbereiches PB anzeigenden Wertes P und des am ersten Eingang i1 empfangenen Clientbitsteuersignales cbs gebildet und über den Ausgang e des ersten Multiplizieres MUL1 an den zweiten Eingang e2 des ersten Addierers ADD1 übertragen, wobei am zweiten Eingang i2 des ersten Addierers ADD1 das Vorzeichen des Produktes umgedreht wird, d.h. einem ein negatives Vorzeichen aufweisendes Produkt wird ein positives bzw. einem ein positives Vorzeichen aufweisendes Produkt wird ein negatives Vorzeichen zugewiesen.

Im ersten Addierer ADD1 wird die Summe aus dem am ersten Eingang i1 anliegenden ersten Hilfssignal hsl und dem am zweiten Eingang i2 anliegenden Produkt aus dem die Anzahl der Bits des Payloadbereiches PB anzeigenden Wert P und dem Clientbitsteuersignales cbs gebildet und über den Ausgang e des ersten Addierers ADD1 an den vierten Eingang i4 der Speichereinheit MEM übertragen.

Gemäß dem in Figur 5 dargestellten modifizierten Sigma-Delta-Modulator MSDM wird zum Zeitpunkt der n-bit parallelen Datenverarbeitung zum Speicherinhalt W der Speichereinheit MEM das mit n multiplizierte Kennzahlsignal bzw. die Kennzahl n*kzs mit Hilfe des zweiten Addierers ADD2 addiert. In der Vergleichseinheit CU wird mit Hilfe der ersten bis n-ten Vergleichsstufe VS1 bis VSn und der hierin implementierten ersten bis n-ten Vergleichsprozeduren VP1 bis Vpn des Weiteren festgestellt, ob die Anzahl der Payloadbits P bzw. das ein bis n-te Vielfache der Anzahl der Payloadbits P kleiner oder gleich dem Wert des ersten Hilfssignales hsl bzw. des ersten Hilfssignalwertes hs1 ist. Trifft dies zu, so wird das jeweilige ein bis n-te Vergleichsergebnis an die Extremwertermittlungseinheit EU übertragen und mit Hilfe der Extremwertermittlungsprozedur EWP das Clientbitsteuersignales cbs ermittelt bzw. gebildet, daß eine n-bitweise Übertragung des Clientdatensignales cds an den betrachtenden n-bit Positionen steuert. Durch das in Extremwertermittlungseinheit EU ermitteltete Clientbitsteuersignal cbs wird die Anzahl der mit Hilfe des ersten Addierers ADD1 von dem ersten Hilfssignal hs1 bzw. dem ersten Hilfssignalwert hs1 subtrahierten Produktes aus der Anzahl der Payloadbits P und dem Clientsteuerbitsignals cbs festgelegt und der Wert der Subtraktion bzw. das Ergebnis als zweites Hilfssignal hs2 bzw. zweiter Hilfssignalwert hs2 vom Ausgang e des ersten Addierers ADD1 an den vierten Eingang i4 der Speichereinheit MEM übertragen sowie dort als neuer Speicherwert W gespeichert.

Zusätzlich wird in der Vergleichseinheit CU mit Hilfe der Vergleichseinheit VU das Clientbitsteuersignal cps an den Clientsteuerausgang SE übertragen. Durch das Clientbitsteuersignal cps wird der in der ersten bzw. zweiten Übertragungseinheit UE1,UE2 angeordneten Pufferspeichereinheit PS1, PS2 angezeigt, daß ein oder mehrere Clientbits im betrachteten n-bit-Bereich des Payloadbereiches PB übertragen werden sollen. Hierbei wird durch den Wert des Clientbitsteuersignales cps die Anzahl der zu übertragenden Clientbits innerhalb des betrachteten n-bit Bereiches angezeigt. Des Weiteren sind in der ersten und zweiten Pufferspeichereinheit PS1, PS2 Bitshifter, beispielsweise "Barrel-Shifter", vorzusehen, mit deren Hilfe die entsprechende Anzahl von Clientbits ausgelesen bzw. eingelesen werden kann. Diese in der ersten und zweiten Pufferspeichereinheit PS1, PS2 angeordneten Bitshifter werden mit Hilfe des Clientbitsteuersignales cps gesteuert.

Zusätzlich wird in der Vergleichseinheit CU mit Hilfe der ein bis n-ten Vergleichsprozeduren VP1 bis VPn und der Extremwertermittlungsprozedur EWP ein inaktives Clientbisteuersignal cps erzeugt, welches anzeigt, daß keine Clientbits an der betrachteten n-bit-parallelen Payloadbitbereiches des Payloadbereiches PB übertragen werden sollen. Hierbei weist das inaktive Clientbitsteuersignal cps den logischen Wert 0 auf. Dieser Wert wird im übrigen auch durch das Clientbitsteuersignal cps außerhalb des Payloadbereiches PB angenommen.

Mit Hilfe des erfindungsgemäßen modifzierten Sigma-Delta-Modulators MSDM werden die Kennzahlen KZ bzw. die Anzahl der im Payloadbereich PB des Serversignales ss übermittelbaren Clientbits C über den Payloadbereich PB gleichmäßig verteilt. Hierdurch wird das Jitter/Wanderverhalten des Übertragungssystems auch bei einer n-bit parallelen Datenverarbeitung verbessert sowie die Speicherkapazität der innerhalb des Übertragungssystems vorzusehenden Pufferspeicher vorteilhaft verringert. Der erfindungsgemäße modifzierten Sigma-Delta-Modulators MSDM wird somit mit dem durch n geteilten Takt beispielsweise des Serversignals ss betrieben.

Der durch die Rundung der Kennzahl KZ auftretende Fehler pro Serverrahmen R kann insbesondere dadurch reduziert werden, daß die fehlende Anzahl von Bits (C-ganzzahliger Teil (C/n)*n) zusätzlich übertragen wird. Die zusätzliche Übertragung der fehlenden Bits des Clientsignals kann beispielsweise an einer speziell zu diesem Zweck definierten bzw. reservierten Bitposition des Payloadbereiches des Serverrahmens R erfolgen, wobei dazu die Anzahl der für das erfindungsgemäße Verfahren zur Verfügung stehenden Payloadbits dementsprechend reduziert wird.

## Patentansprüche

1. Verfahren zur Übertragung von mindestens einem Clientsignal (CS,cds) innerhalb eines eine vorgegebene Übertragungsbitrate (F) aufweisenden Serversignales (ss), wobei die Übertragungsbitrate des Clientsignals (f) und die Übertragungsbitrate des Serversignals (ss) unterschiedlich sind,
- bei dem sendeseitig zumindest eine die Übertragungsbitratenverhältnisse anzeigende Kennzahl (KZ) für zumindest ein Clientsignal (CS,cds) ermittelt wird,
- bei dem die Daten des mindestens einen Clientsignales (CS,cds) durch eine Sigma-Delta-Modulation (SDM1) mit der ermittelten Kennzahl (KZ) gleichmässig in das Serversignal (ss) eingefügt werden,
- bei dem das Serversignal (ss) mit der ermittelten Kennzahl (KZ) übertragen wird,
- bei dem empfangsseitig durch eine Sigma-Delta-Modulation (SDM2) mit der übertragenen Kennzahl (KZ) aus dem übertragenen Serversignal (ss) die Daten des mindestens einen Clientsignales (CS,cds) ermittelt werden.

2. Verfahren nach Anspruch 1,
**dadurch gekennzeichnet,**
**daß** das Serversignal (ss) eine Rahmenstruktur aufweist, wobei ein Serverrahmen (R) jeweils in einen Overheadbereich (OB) und einen Payloadbereich (PB) aufgeteilt ist.

3. Verfahren nach Anspruch 1 und 2,
**dadurch gekennzeichnet,**
**daß** die ermittelte Kennzahl (KZ) im Overheadbereich (OB) des Serversignals (ss) übertragen wird.

4. Verfahren nach einem der Ansprüche 1 bis 3,
**dadurch gekennzeichnet,**
**daß** die Anzahl der auf das Serversignal (ss) verteilten Daten des Clientsignals (CS,cds) durch die Kennzahl (KZ) festgelegt wird.

5. Verfahren nach einem der Ansprüche 1 bis 4,
**dadurch gekennzeichnet,**
**daß** die ermittelte Kennzahl (KZ) als Zähler und die datenformatsspezifische Größe des Payloadbereiches (P) des Serversignals (ss) als Nenner für die Sigma-Delta-Modulation verwendet werden.

6. Verfahren nach einem der Ansprüche 1 bis 5,
**dadurch gekennzeichnet,**
**daß** sendeseitig mit Hilfe der Sigma-Delta-Modulation (SDM1) die Payloadbereichs-Position der jeweiligen innerhalb des Serversignals (ss) zu übertragenden Daten des Clientsignals (CS,cds) ermittelt wird und an der ermittelten Payloadbereichs-Position ein Datum des Clientsignals (CS,cds) in das Serversignal (ss) eingefügt wird.

7. Verfahren nach einem der Ansprüche 1 bis 6,
**dadurch gekennzeichnet,**
**daß** empfangseitig mit Hilfe der Sigma-Delta-Modulation (SDM2) und der mitübermittelten Kennzahl (KZ) die Payloadbereichs-Position des jeweiligen innerhalb des Serversignals (ss) übertragenden Datums des Clientsignals (CS,cds) ermittelt wird und an der ermittelten Payloadbereichs-Position das Datum des Clientsignals (CS,cds) aus dem Serversignal (ss) ausgelesen wird.

8. Verfahren nach einem der Ansprüche 1 bis 7,
**dadurch gekennzeichnet,**
**daß** zur Übertragung von mehreren, unterschiedliche Bitraten aufweisenden Clientsignalen (CS1,CS2) über das eine Serversignal (ss) jeweils einem Clientsignal (CS1,CS2) ein oder mehrere Abschnitte des Payloadbereiches (PB) des Serversignals (ss) zugewiesen werden.

9. Verfahren nach Anspruch 8,
**dadurch gekennzeichnet,**
**daß** bei der Übertragung von mehreren, unterschiedliche Bitraten aufweisenden Clientsignalen (CS1,CS2) für jeweils ein Clientsignal (CS1,CS2) eine Kennzahl (KZ1,KZ2) ermittelt und übertragen wird.

10. Verfahren nach Anspruch 8 oder 9,
**dadurch gekennzeichnet,**
**daß** bei der Übertragung von mehreren, unterschiedliche Bitraten aufweisenden Clientsignalen (CS1,CS2) für jeweils ein Clientsignal (CS1,CS2) jeweils eine Sigma-Delta-Modulation durchgeführt wird.

11. Verfahren nach einem der Ansprüche 1 bis 10,
**dadurch gekennzeichnet,**
**daß** die Kennzahl (KZ) durch einen Sicherheitsmechanismus geschützt wird.

12. Verfahren nach einem der Ansprüche 1 bis 11,
**dadurch gekennzeichnet,**
**daß** die Übertragung der Daten des mindestens einen Clientsignals (CS,cds) innerhalb des Payloadbereiches (PB) des Serversignales (ss) bitweise oder n-bitweise durchgeführt wird.

13. Anordnung zur Übertragung von mindestens einem Clientsignal (CS,cds) innerhalb eines eine vorgegebene Übertragungsbitrate (F) aufweisenden Serversignales, wobei die Übertragungsbitrate (f) des Clientsignals (Cs,cds) und die Übertragungsbitrate (F) des Serversignals (ss) unterschiedlich sind,
**dadurch gekennzeichnet,**
- **daß** in einer ersten Übertragungseinheit (UE1) eine Kennzahlermittlungseinheit (CEU) zur Ermittlung zumindest einer die Übertragungsbitratenverhältnisse anzeigenden Kennzahl (KZ) für zumindest ein Clientsignal (CS,cds) vorgesehen ist,
- **daß** in der ersten Übertragungseinheit (UE1) ein erster Sigma-Delta-Modulator (SDM1) zur Bestimmung eines Einfügesteuersignales (cbs) anhand der ermittelten Kennzahl (KZ) für das nahezu gleichmässige Einfügen der Daten des mindestens einen Clientsignales (CS,cds) in das Serversignal (ss) vorgesehen ist,
- **daß** eine Kennzahleinfügeeinheit (CIU) zum Einfügen der Kennzahl (KZ) in das Serversignal (ss) vorgesehen ist,
- **daß** in der ersten Übertragungseinheit (UE1) Mittel zur Übertragung des Serversignal (ss) mit der ermittelten Kennzahl (KZ) zu mindestens einer zweiten Übertragungseinheit (UE2) vorgesehen sind,
- **daß** in der zweiten Übertragungseinheit (UE2) eine Kennzahlentnahmeeinheit (CXU) zur Entnahme der Kennzahl (KZ) aus dem übertragenen Serversignal (ss) vorgesehen ist,
- **daß** ein zweiter Sigmal-Delta-Modulator (SDM2) zur Bestimmung eines Entnahmesteuersignales (cbs) anhand der übertragenen Kennzahl (KZ) für eine Entnahme der Daten des mindestens einen Clientsignales (CS,cds) aus dem übertragenen Serversignal (ss) vorgesehen ist.

14. Anordnung nach Anspruch 13,
**dadurch gekennzeichnet,**
**daß** in der ersten bzw. zweiten Übertragungseinheit (UE1,UE2) eine erste bzw. zweite Rahmenzählereinheit (RZU1,RZU2) zur Ermittlung eines Rahmenstartsignales (rss) und eines Payloadbereichsignales (pls) anhand des Servertaktsignales (stt) vorgesehen ist.

15. Anordnung nach Anspruch 12 und 14,
**dadurch gekennzeichnet,**
**daß** in der zweiten Übertragungseinheit (UE2) eine Clienttaktermittlungseinheit (CTU) zur Ermittlung des Clienttaktsignales (cst) mindestens anhand der übertragenen Kennzahl (KZ) und des Servertaktsignales (sti) vorgesehen ist.

16. Anordnung nach Anspruch 15,
**dadurch gekennzeichnet,**
**daß** in der ersten bzw. zweiten Übertragungseinheit (UE1,UE2) mindestens ein erster bzw. zweiter Pufferspeicher (PS1,PS2) zur Speicherung der Client- bzw. Serversignals (CS,cds,ss) vorgesehen ist, wobei der aktuelle Füllstand des ersten bzw. zweiten Pufferspeichers (PS1,PS2) der Kennzahlermittlungseinheit (CEU) bzw. der Clienttaktermittlungseinheit (CTU) angezeigt wird.
